# EUROPEAN PATENT SPECIFICATION

(11) **EP 2 123 952 B1**
(45) Date of publication and mention of the grant of the patent: **09.09.2015**
(21) Application number: 07850459.4
(22) Date of filing: 12.12.2007
(51) Int. Cl.: F16J 15/32

(54) **SEALING DEVICE**
DICHTUNGSVORRICHTUNG
DISPOSITIF D'ÉTANCHÉITÉ

(30) Priority: 22.02.2007 JP 2007041590
(43) Date of publication of application: 25.11.2009
(73) Proprietor: NOK Corporation, Minato-ku Tokyo 105-8585 (JP)
(72) Inventor: KANZAKI, Go, Fukushima-shi Fukushima 960-1102 (JP)
(74) Representative: TBK
(86) International application number: PCT/JP2007/073908
(87) International publication number: WO 2008/102505

(56) References cited:
- DE-A1- 19 717 199
- JP-A- 2003 314 698
- JP-A- 2005 291 450
- JP-A- 2006 145 015
- JP-A- 2006 342 828
- JP-U- 04 093 571

## Description

### BACKGROUND OF THE INVENTION

### Field of the Invention

The present invention relates to a sealing device in accordance with a sealing technique. The sealing device in accordance with the present invention is used, for example, as a hub bearing seal in a motor vehicle relevant field, or is used in a general purpose machine or the like.

### Description of the Conventional Art

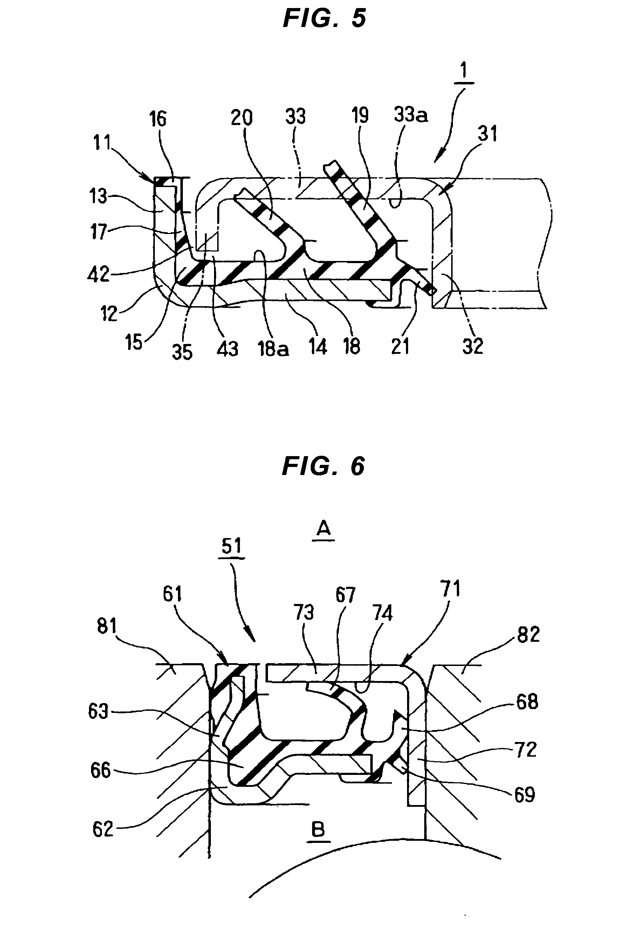

Conventionally, a sealing device 51 shown in Fig. 6 has been known. The sealing device 51 is used as a hub bearing seal in a bearing portion of a wheel suspension device for a motor vehicle, and is constructed by a combination of a seal member 61 installed to an inner peripheral side of a bearing outer ring 81, and a slinger 71 installed to an outer peripheral side of a bearing inner ring 82 (refer to patent document 1 or 2).

The slinger 71 is made of a metal material, is formed to have an approximately L-shaped cross section by integrally forming a flange portion 73 at one end in an axial direction of a tubular portion 72, and is fitted to an outer peripheral surface of the inner ring 82 by the tubular portion 72.

The seal member 61 is structured by attaching a rubber-like elastic body 66 to a metal ring 62 having an approximately L-shaped cross section in the same manner, and is fitted to an inner peripheral surface of the outer ring 81 by a tubular portion 63 of the metal ring 62. In the rubber-like elastic body 66, there are integrally formed three lips constituted by a side lip 67 slidably coming into close contact with an axial end surface 74 of the flange portion 73 of the slinger 71, a radial lip (also called as an axial lip or a dust lip) 68 slidably coming into close contact with an outer peripheral surface of the tubular portion 72 of the slinger 71, and a grease lip 69 arranged in an inner side thereof.

The sealing device 51 having the structure mentioned above is installed to one end opening portion in the axial direction of the bearing portion, and achieves a seal function for both preventing a grease in an internal space B from leaking out to an external space A and preventing muddy water or the like in the external space A from making an intrusion into the internal space B. However, in the case that the sealing device 51 is used under a high circumferential speed condition (a maximum rotating speed level of a hub bearing seal: about 2000 rpm), there is a case that a great sliding heat is generated in the radial lip 68, whereby a permanent deformation is caused in the radial lip 68, an interference allowance and a tracking performance are lessened, and muddy water makes an intrusion. The great sliding heat is generated in the radial lip 68 because a torque (fastening force) thereof is large.

In order to dissolve the problem mentioned above, it can be considered to omit the radial lip 68 from the structure of the sealing device 51 mentioned above so as to suppress the sliding heat generation.

However, when one lip for sealing against muddy water or the like, which is an object of sealing, is reduced only by omitting the radial lip 68, the sliding heat generation can be suppressed, however, there is fear that a sealing performance (a muddy water resistance) is lowered.

Accordingly, it can be considered to make an addition of a second side lip (not shown) at an outer side of the side lip 67 as well as an omission of the radial lip 68, thereby securing the sealing performance (the muddy water resistance) as well as suppressing the sliding heat generation. Since a generated torque is generally smaller in an end surface contact type side lip in comparison with a peripheral surface contact type radial lip, it is considered to employ the end surface contact type side lip.

However, in the case that the second side lip is added at the outer side of the side lip 67 and the radial lip 68 is omitted as mentioned above, if the added outer second side lip is formed in the same shape as the existing inner side lip 67, a comparatively great torque is newly generated by the added outer second side lip. Accordingly, a significance for omitting the radial lip 68 is reduced. Since a distance from the center of rotation is larger in the second side lip arranged at the outer side than the side lip 67 arranged at the inner side, a degree of effect to a torque increase is large. Therefore, the generated torque becomes large unexpectedly.
Patent Document 1: Japanese Unexamined Patent Publication No. 2006-161858
Patent Document 2: Japanese Unexamined Patent Publication No. 2006-322536

JP 2006 342828 A and DE 197 17 199 likewise disclose sealing arrangements which have plural sealing lips for sealing a gap between two members to be sealed. DE 197 17 199 which constitutes the closest prior art, further discloses that there are two sealing lips for sealing with the member to be sealed which have same shape and/or which are shaped to have the same deflection amount when sealing the gap.

### SUMMARY OF THE INVENTION

### Problem to be Solved by the Invention

The present invention is made by taking the points mentioned above into consideration, and an object of the present invention is to provide a sealing device having a plurality of side lips, in which a generated torque can be made as small as possible.

### Means for Solving the Problem

In order to achieve the object mentioned above, a sealing device according to claim 1 is provided. Further advantageous developments are subject-matters of the dependent claims.

There is provided a sealing device constructed by a combination of a seal member installed to one of two relatively rotating members, and a slinger installed to the other, the sealing device comprising:
the seal member having a first side lip slidably coming into close contact with an axial end surface of the slinger, and a second side lip arranged closer to an object of sealing than the first side lip at an outer side of the first side lip,
wherein the second side lip has such a shape that an interference allowance thereof is smaller than that of the first side lip.

The sealing device comprises
a first side lip slidably coming into close contact with an axial end surface of its mate member; and
a second side lip arranged closer to an object of sealing than the first side lip at an outer side of the first side lip,
wherein the second side lip has such a shape that thereof an interference allowance is smaller than that of the first side lip.

Further, there is provided a sealing device, wherein the second side lip can be formed as a labyrinth structure which is in non-contact with the axial end surface of the mate member or the slinger, and the interference allowance is set to zero.

### Effect of the Invention

In the sealing device in accordance with claim 1 of the present invention provided with the structure mentioned above, since the seal member is provided with the first side lip which slidably comes into close contact with the axial end surface of the slinger, the second side lip is arranged closer to the object of sealing than the first side lip at the outer side of the first side lip, the second side lip is formed in such the shape that the interference allowance thereof is smaller than that of the first side lip, and the interference allowance correlates with a sliding torque, it is possible to hold down a generated torque on the basis of the shape having the small interference allowance. Therefore, in accordance with the present invention, it is possible to hold down the generated torque in comparison with the case that the second side lip is formed in the same shape as that of the first side lip.

In this case, the kind of the mate member along which the side lip slides is not limited to the slinger but, for example, there may be a case that the side lip slides along an axial end surface of a flange portion which is directly provided on the rotating shaft. Accordingly, in claim 2 of the present invention, the definition of "mate member" replaces "slinger", whereby it is indicated that the kind of the mate member along which the side lip slides is not limited to the slinger. Further, in the case that the flange portion is directly provided on the rotating shaft, it is often structured such that a curved surface (a round surface) having a circular arc cross sectional shape is formed from a cylindrical outer peripheral surface of the rotating shaft to an axial end surface (a plane perpendicular to the axis) of the flange portion is formed. Accordingly, the case that the side lip slides along the curved surface (the round surface) mentioned above is included in a technical range of the invention in accordance with claim 2.

Further, as defined in claim 3, the second side lip may be formed as the labyrinth structure which is in non-contact with the mate member or the axial end surface of the slinger, and the interference allowance is set to zero. In this case, it is possible to completely suppress an increase of the torque caused by adding the second side lip, and it is additionally possible to protect the first side lip from a foreign material such as muddy water or the like by the second side lip as well as increasing the sealing performance by adding the second side lip.

### BRIEF EXPLANATION OF DRAWINGS

Fig. 1 is a cross sectional view of a substantial part of a sealing device in accordance with a first embodiment of the present invention;
Fig. 2 is a cross sectional view of a substantial part of a sealing device in accordance with a second embodiment of the present invention;
Fig. 3 is a cross sectional view of a substantial part of a sealing device in accordance with a third embodiment of the present invention;
Fig. 4 is a cross sectional view of a substantial part of a sealing device in accordance with a fourth embodiment of the present invention;
Fig. 5 is a cross sectional view of a substantial part of a sealing device in accordance with a fifth embodiment of the present invention; and
Fig. 6 is a cross sectional view of a substantial part showing an installed state of a sealing device in accordance with a conventional art.

### Description of Reference Numerals

1 sealing device
11 seal member
12 metal ring
13, 32 tubular portion
14, 33 flange portion
15 rubber-like elastic body
16 end surface rubber portion
17 inner peripheral rubber portion
18 flange rubber portion
18a, 33a, 34a axial end surface
19 first side lip
20 second side lip
21 grease lip
31 slinger
34 taper portion
35 cylinder portion
41, 42, 43 labyrinth seal

### DETAILED DESCRIPTION OF PREFERRED EMBODIMENT

The following embodiments are included in the present invention.
(1) As for the sealing device having the conventional shape (Fig. 6), in the case of rotating at the high circumferential speed, permanent deformation of the lip is caused by the sliding heat generation, a reduction of the interference allowance and a reduction of the tracking performance are caused, and muddy water intrusion (muddy water leakage) is caused. As a major reason of the sliding heat generation, there is considered a large torque (large fastening force) of the axial lip portion (the dust lip). First of all, the inventor has made a study of such a shape that the axial lip (the dust lip) is omitted for suppressing the sliding heat generation. In the case of omitting only the axial lip (the dust lip) from the conventional shape, one lip for sealing muddy water is lost, so that it is possible to suppress the permanent deformation due to the sliding heat generation, however, there is fear that the muddy water resistance is lowered. Accordingly, the inventor has made a study of an idea for improving the muddy water resistance with the shape in which the axial lip (the dust lip) is omitted, by adding one or more side lip type lip which has a small effect to the torque and is effective in improving the muddy water resistance. Further, in the two side lip type, the outer side lip plays a role of protecting the inner side lip from a bad environment due to muddy water. The inner side lip is protected by the outer side lip, and when considering a total seal service life, it is possible to improve a service life (improve the muddy water resistance).
(2) In the case of the shape in accordance with the present invention, it is possible to improve the service life (improve the muddy water resistance) in comparison with the conventional shape (Fig. 6). This is because one piece of the side lip greatly contributing to the heat generation suppression and the muddy water resistance is increased, by replacing the axial lip (the dust lip) with the side lip type. In a construction of the side lip, the outer side lip plays a role of protecting the inner side lip. Accordingly, the outer side lip is formed in such a shape that the interference allowance and the contact force are reduced in comparison with those of the inner side lip, thereby positively taking a heat generation countermeasure (making torque low). In this case, the interference allowance of the outer side lip may be formed as a labyrinth specification. The total service life (the muddy water resistance) of the seal becomes better than that of the conventional shape. As a further heat generation countermeasure (low torque), a labyrinth type grease lip may be considered. In this case, since there is fear that the slinger is detached from the seal at a time of conveying or the like, a come-off prevention is set as a countermeasure. Further, even in the case that the labyrinth is not employed, if there is fear that the slinger is detached from the seal, it can be set.
(3) shape of two side lip type (two or more may be employed as far as it satisfies a function)
(3-1) heat generation countermeasure (making torque low) and improvement of muddy water resistance
(3-2) interference allowance relation between outer side lip and inner side lip (outer side ≦ inner side)
(3-3) outer side lip set for the purpose of protecting inner side lip (outer side lip may employ labyrinth specification)
(3-4) making grease lip to be in labyrinth type as further heat generation countermeasure (making torque low)
(3-5) additionally slinger detachment countermeasure from seal

Next, a description will be given of an embodiment in accordance with the present invention with reference to the accompanying drawings.

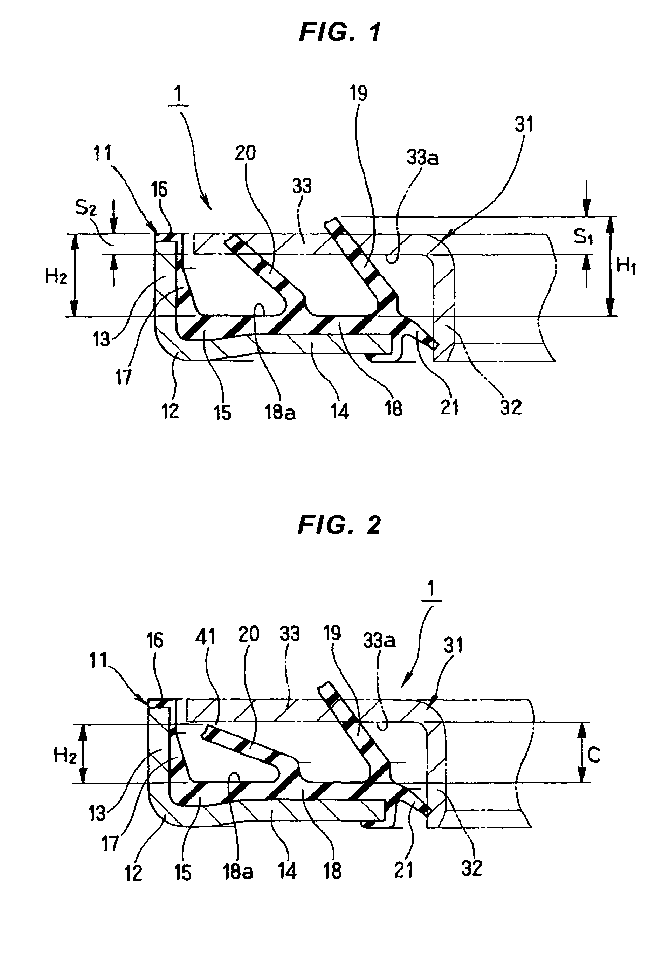

Fig. 1 shows a cross section of a substantial part of a sealing device 1 in accordance with an embodiment of the present invention. The sealing device 1 in accordance with the embodiment is used as a hub bearing seal in a bearing portion of a wheel suspension device for a motor vehicle, and is structured as follows.

First, the sealing device 1 is constructed by a combination of a seal member (also called as an oil seal or a lip seal) 11 installed to an inner peripheral side of a bearing outer ring (not shown, refer to Fig. 6), and a slinger 31 installed to an outer peripheral portion of a bearing inner ring (not shown, refer to Fig. 6). In this case, Fig. 1 shows a state before assembling the seal member 11 and the slinger 31, for showing a free state of each of the lips, and accordingly shows the slinger 31 by an alternate long and short dash line.

The slinger 31 is made of a metal material, is obtained by integrally forming a flange portion 33 on one end in an axial direction of a tubular portion 32 toward an outer side in a radial direction, and is fitted to an outer peripheral surface of the bearing inner ring by the tubular portion 32.

The seal member 11 is constructed by the metal ring 12, and a rubber-like elastic body 15 attached (vulcanization bonded) to the metal ring 12. The metal ring 12 is obtained by integrally forming a flange portion 14 on one end in an axial direction of the tubular portion 13 toward an inner side in a radial direction, and is fitted to an inner peripheral surface of the bearing outer ring by the tubular portion 13.

The rubber-like elastic body 15 integrally has an end surface rubber portion 16 attached to an end surface portion of the tubular portion 13 of the metal ring 12, an inner peripheral rubber portion 17 attached to an inner peripheral surface of the tubular portion 13, a flange rubber portion 18 attached to an end surface in an axial direction of the flange portion 14, a first side lip 19 slidably coming into close contact with an axial end surface 33a of the flange portion 33 in the slinger 31, a second side lip 20 arranged in an outer diameter side of the first side lip 19 and slidably coming into close contact with the axial end surface 33a of the flange portion 33 in the slinger 31 in the same manner as the first side lip 19, and a grease lip 21 slidably coming into close contact with an outer peripheral surface of the tubular portion 32 of the slinger 31.

In the lips mentioned above, each of the first and second side lips 19 and 20 is structured such as to make sealing to prevent a foreign material such as muddy water, dust or the like in an external portion from making an intrusion into a bearing inner portion, is constructed as an outward structure from its function, and is formed such that a diameter is enlarged little by little from its base end toward a distal end.

Further, the second side lip 20 is arranged closer to an object of sealing (a foreign material such as muddy water or the like) than the first side lip 19 at an outer side of the first side lip 19, is formed such that its thickness is identical or approximately identical to a thickness of the first side lip 19, however, is formed such that its axial height H₂ in a free state is smaller than an axial height H₁ of the first side lip 19, thereby being set such that its interference allowance S₂ is smaller than an interference allowance S₁ of the first side lip 19.

Therefore, in accordance with the structure mentioned above, since the second side lip 20 is formed in such a shape that its interference allowance is smaller than the interference allowance of the first side lip 19, it is possible to hold down a torque (a torque corresponding to two side lips) generated at a time of sliding, in comparison with the case that the second side lip 20 is formed as the same shape as the first side lip 19.

Further, it can be considered that the structure of the sealing device 1 in accordance with the first embodiment is added or changed as follows.
(1) In the first embodiment mentioned above, the second side lip 20 is structured such as to slide along the slinger 31 in the same manner as the first side lip 19, however, the second side lip 20 is formed as a labyrinth structure which is in non-contact with the slinger 31 and the interference allowance is set to zero, in place thereof. In accordance with this structure, it is possible to completely suppress an increase of a sliding torque caused by the addition of the second side lip 20. Further, it is additionally possible to increase a sealing performance by adding the second side lip 20 (adding the labyrinth seal), and it is possible to protect the first side lip 19 from a foreign material such as muddy water or the like by the second side lip 20. Concrete embodiments will be shown as follows.

### Second Embodiment

In an embodiment in Fig. 2, the axial height H₂ of the second side lip 20 in the free state before being assembled is set smaller than an interval C between an axial end surface 18a of the flange rubber portion 18 in the seal member 11 and an axial end surface 33a of the flange portion 33 in the slinger 31 under the assembled state, whereby a non-contact labyrinth seal 41 is provided between a distal end portion of the second side lip 20 and the axial end surface 33a of the flange portion 33 in the slinger 31.

### Third Embodiment

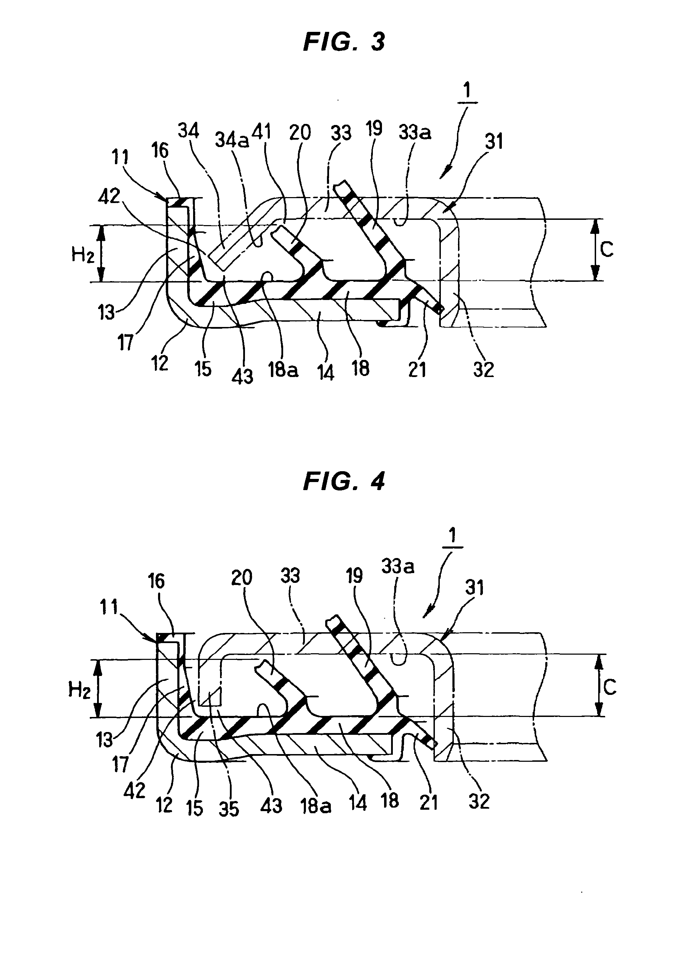

In an embodiment in Fig. 3, a conical surface shaped taper portion 34 bent toward the flange rubber portion 18 of the seal member 11 is integrally formed at a distal end portion (an outer peripheral portion) of the flange portion 33 in the slinger 31, and the axial height H₂ of the second side lip 20 in the free state before being assembled is set smaller than the interval C between the axial end surface 18a of the flange rubber portion 18 in the seal member 11 and the axial end surface 33a of the flange portion 33 in the slinger 31 under the assembled state, whereby the non-contact labyrinth seal 41 is provided between the distal end portion of the second side lip 20, and the axial end surface 33a of the flange portion 33 in the slinger 31 and the axial end surface 34a of the taper portion 34. Further, in the embodiment in Fig. 3, since non-contact labyrinth seals 42 and 43 are provided respectively between the distal end portion of the taper portion 34 in the slinger 31 and the inner peripheral surface of the inner peripheral rubber portion 17 in the seal member 11 and between the distal end portion of the taper portion 34 in the slinger 31 and the axial end surface 18a of the flange rubber portion 18 in the seal member 11, a ternary labyrinth seal is totally provided.

### Fourth Embodiment

In an embodiment in Fig. 4, a cylinder portion 35 bent toward the flange rubber portion 18 of the seal member 11 is integrally formed at a distal end portion (an outer peripheral portion) of the flange portion 33 in the slinger 31, and the axial height H₂ of the second side lip 20 in the free state before being assembled is set smaller than the interval C between the axial end surface 18a of the flange rubber portion 18 in the seal member 11 and the axial end surface 33a of the flange portion 33 in the slinger 31 in the assembled state, whereby the non-contact labyrinth seal 41 is provided between the distal end portion of the second side lip 20 and the axial end surface 33a of the flange portion 33 in the slinger 31. Further, in the embodiment in Fig. 4, since the non-contact labyrinth seals 42 and 43 are provided respectively between the outer peripheral surface of the cylinder portion 35 in the slinger 31 and the inner peripheral surface of the inner peripheral rubber portion 17 in the seal member 11 and between the axial end surface of the cylinder portion 35 in the slinger 31 and the axial end surface 18a of the flange rubber portion 18 in the seal member 11, a ternary labyrinth seal is totally provided.
(2) In the first embodiment mentioned above, the flange portion of the slinger is formed in the axially vertical flat plate shape, however, when a cylinder portion bent toward the flange rubber portion 18 of the seal member 11 is integrally formed at the distal endportion (the outer peripheral portion) of the flange portion 33, and the labyrinth seal is provided between the cylinder portion and the seal member 11, it is possible to improve a sealing performance by this labyrinth seal. Concrete embodiments will be shown as follows.

### Fifth Embodiment

In an embodiment in Fig. 5, the cylinder portion 35 bent toward the flange rubber portion 18 of the seal member 11 is integrally formed at the distal end portion (the outer peripheral portion) of the flange portion 33 in the slinger 31, and the non-contact labyrinth seals 42 and 43 are provided respectively between the outer peripheral surface of the cylinder portion 35 and the inner peripheral surface of the inner peripheral rubber portion 17 in the seal member 11 and between the axial end surface of the cylinder portion 35 and the axial end surface 18a of the flange rubber portion 18 in the seal member 11.
(3) In the first embodiment mentioned above, the grease lip 21 is structured such as to slide along the slinger 31, however, the grease lip 21 is constructed as the non-contact labyrinth structure with respect to the slinger 31, and the interference allowance is set to zero in place thereof. In accordance with this structure, it is possible to further reduce the sliding torque generated at a time of sliding as a whole of the sealing device 1. In this case, if there is fear that the slinger 31 is detached from the seal member 11 at a time of conveying or the like, it is preferable to apply a come-off preventing countermeasure to the end portion of the tubular portion 32 in the slinger 31, by forming in a bending manner or the like an engagement piece provided with a larger outer diameter than an inner diameter of the grease lip 21. Further, if there is fear that the slinger 31 is detached from the seal member 11 at a time of conveying or the like even in the structure in which the grease lip 21 slides along the slinger 31, it is preferable to employ the come-off preventing countermeasure in the same manner.
(4) In the first embodiment mentioned above, the grease lip 21 is provided toward the internal space side (a downward direction in Fig. 1) for sealing against grease in the internal space, however, since the sealing against the grease can be made even by providing it toward the external space side (an upward direction in Fig. 1), the grease lip 21 may be provided toward the external space side.
(5) The slinger 31 may be structured such that a magnetic encoder is additionally provided on the flange portion 33.
(6) In the first embodiment mentioned above, since the rising surfaces of the first side lip 19 and the second side lip 20 (the axial end surface 18a of the flange rubber portion 18) have the same planar shape, the axial height H₂ of the second side lip 20 in the free state is formed smaller than the axial height H₁ of the first side lip 19. However, in the case that a displacement in an axial direction exists between the rising surfaces of both the lips 19 and 20, there may be a case that the axial height H₂ of the second side lip 20 in the free state is formed larger than the axial height H₁ of the first side lip 19. Even in the case mentioned above, any structure is included in the technical range of the present invention as far as the interference allowance S₂ of the second side lip 20 is set smaller than the interference allowance S₁ of the first side lip 19.

The other structures, and operational effects in the second and further embodiments are identical to those of the first embodiment mentioned above. Accordingly, a description thereof will be omitted by attaching the same reference numerals.

## Claims

1. A sealing device (1) comprising:
a first side lip (19) slidably coming into close contact with an axial end surface (33a) of its mate member (31); and
a second side lip (20) arranged closer to an object of sealing than said first side lip (19) at a radial outer side of said first side lip (19), wherein the second side lip (20) extends toward the axial end surface of its mate member,
**characterized in that**
said second side lip (20) has such a shape that its axial height H2 in a free state is smaller than an axial height H1 of the first side lip (19), whereby an interference allowance thereof is smaller than that of said first side lip (19).

2. A sealing device (1) as claimed in claim 1,
wherein the sealing device (1) is constructed by a combination of a seal member (11) installed to one of two relatively rotating members, and a slinger (31) installed to the other, and
said seal member (11) having said first side lip (19) slidably coming into close contact with an axial end surface of said slinger (31), and said second side lip (20).

3. A sealing device (1) as claimed in claim 1 or 2,
wherein the second side lip (20) is formed as a labyrinth structure which is in non-contact with the axial end surface of the mate member or the slinger (31), and the interference allowance is set to zero.

4. A sealing device (1) as claimed in claim 1,
wherein a conical surface shaped taper portion (34) or cylinder portion (35) bent toward the seal member (11) is integrally formed at a distal end portion of the flange portion in the slinger (31), and a non-contact labyrinth seal is provided between said taper portion (34) or the cylinder portion (35) and the seal member (11).

## Patentansprüche

1. Dichtvorrichtung (1), die folgendes aufweist:
eine erste Seitenlippe (19), die mit einer axialen Endfläche (33a) von deren Fügebauteil (31) gleitfähig in engen Kontakt kommt; und
eine zweite Seitenlippe (20), die näher an einem Dichtgegenstand als die erste Seitenlippe (19) auf einer radial äußeren Seite der ersten Seitenlippe (19) angeordnet ist, wobei sich die zweite Seitenlippe (20) zu der axialen Endfläche von deren Fügebauteil erstreckt,
**dadurch gekennzeichnet, dass**
die zweite Seitenlippe (20) solch eine Form hat, dass deren axiale Höhe H2 in einem freien Zustand kleiner als eine axiale Höhe H1 der ersten Seitenlippe (19) ist, wodurch eine erlaubte Überlappung von dieser kleiner als jene der ersten Seitenlippe (19) ist.

2. Dichtvorrichtung (1) nach Anspruch 1,
wobei die Dichtvorrichtung (1) durch eine Kombination eines Dichtbauteils (11), das an einem von zwei sich relativ drehenden Bauteilen installiert ist, und einem Anschlag (31), der an dem anderen installiert ist, und
das Dichtbauteil (11) die erste Seitenlippe (19), die mit einer axialen Endfläche des Anschlags (31) gleitfähig in engen Kontakt kommt, und die zweite Seitenlippe (20) hat.

3. Dichtvorrichtung (1) nach Anspruch 1 oder 2,
wobei die zweite Seitenlippe (20) als eine Labyrinthstruktur ausgebildet ist, die mit der axialen Endfläche des Fügebauteils oder des Anschlags (31) nicht in Kontakt ist, und die erlaubte Überlappung auf Null gesetzt ist.

4. Dichtvorrichtung (1) nach Anspruch 1,
wobei ein konusflächenförmiger Verjüngungsabschnitt (34) oder Zylinderabschnitt (35), der zu dem Dichtbauteil (11) hin gebogen ist, einstückig an einem distalen Endabschnitt des Pflanzabschnitts in dem Anschlag (31) ausgebildet ist und eine kontaktlose Labyrinthdichtung zwischen dem Verjüngungsabschnitt (34) oder dem Zylinderabschnitt (35) und dem Dichtbauteil (11) vorgesehen ist.

## Revendications

1. Dispositif d'étanchéité (1) comprenant :
une première lèvre latérale (19) entrant, par coulissement, en contact étroit avec une surface d'extrémité axiale (33a) de son élément d'accouplement (31) ; et
une deuxième lèvre latérale (20) agencée plus près d'un objet d'étanchéité que ladite première lèvre latérale (19) au niveau d'un côté extérieur radial de ladite première lèvre latérale (19), où la deuxième lèvre latérale (20) s'étend vers la surface d'extrémité axiale de son élément d'accouplement,
**caractérisé en ce que**
ladite deuxième lèvre latérale (20) a une forme telle que sa hauteur axiale H2 dans un état libre soit inférieure à une hauteur axiale H1 de la première lèvre latérale (19), moyennant quoi, une marge d'interférence de celle-ci est inférieure à celle de ladite première lèvre latérale (19).

2. Dispositif d'étanchéité (1) tel que revendiqué dans la revendication 1,
dans lequel le dispositif d'étanchéité (1) est réalisé par une combinaison d'un élément d'étanchéité (11) installé sur l'un des deux éléments à rotation relative, et d'une bague d'étanchéité (31) installée sur l'autre, et
ledit élément d'étanchéité (11) ayant ladite première lèvre latérale (19) entrant, par coulissement, en contact étroit avec une surface d'extrémité axiale de ladite bague d'étanchéité (31), et ladite deuxième lèvre latérale (20).

3. Dispositif d'étanchéité (1) tel que revendiqué dans la revendication 1 ou 2,
dans lequel la deuxième lèvre latérale (20) se présente sous la forme d'une structure à labyrinthe qui est dans un état de non-contact avec la surface d'extrémité axiale de l'élément d'accouplement ou de la bague d'étanchéité (31), et la marge d'interférence est mise à zéro.

4. Dispositif d'étanchéité (1) tel que revendiqué dans la revendication 1,
dans lequel une partie cylindrique (35) ou une partie effilée en forme de surface conique (34) courbée vers l'élément d'étanchéité (11) est formée d'un seul tenant au niveau d'une partie d'extrémité distale de la partie de bride dans la bague d'étanchéité (31), et un joint d'étanchéité à labyrinthe sans contact est prévu entre ladite partie effilée (34) ou la partie cylindrique (35) et l'élément d'étanchéité (11).
